# EUROPEAN PATENT APPLICATION

(11) **EP 0 748 965 A1**
(43) Date of publication of application: **18.12.1996**
(21) Application number: 96109515.5
(22) Date of filing: 13.06.1996
(51) Int. Cl.: F16H 61/36

(54) **Vehicle gearbox control device**

(30) Priority: 16.06.1995 IT TO950508
(71) Applicant: ROLTRA MORSE S.p.A., I-86077 Pozzilli (IT)
(72) Inventor: Bravo, Ernesto, 10020 Cambiano (IT)
(74) Representative: Franzolin, Luigi

(57) **Abstract**

A vehicle gearbox control device (1) presenting a supporting element (2) fitted to the vehicle body; an intermediate element (4) rotatable in relation to the supporting element (2) about a first axis (A); a control lever (5) fitted to and rotatable in relation to the intermediate element (4) about a pin (24) defining a second axis (B) perpendicular to the first axis (A); and a linkage lever (35) hinged to the supporting element (2) about a third axis (C); the control lever (5) and the linkage lever (35) being connected to respective gear selection and engagement control cables (23, 40) by respective ball joints (25, 41) presenting a spherical seat (46) formed in the respective lever (5; 35), and a spherical head (47) integral with a terminal (22, 39) of the respective cable (23, 40).

## Description

The present invention relates to a vehicle gearbox control device, or more specifically to a gearshift control device.

Known gearshift control devices substantially comprise a supporting element fitted to a vehicle body element; and a control lever connected to and rotatable in relation to the supporting element about a first and second axis perpendicular to each other.

Rotation of the control lever about the first and second axes is transmitted to the gearbox via respective transmission members, to respectively control selection and engagement of the gears. The transmission members normally comprise flexible Bowden cables or rigid rods, one of which is connected directly to the control lever, and the other of which is activated by the control lever via a linkage lever.

The transmission members are connected to the control lever and the linkage lever by respective ball joints comprising a spherical seat formed in a terminal fitted to one end of the relative transmission member, and a spherical head on the respective lever.

More specifically, the spherical seat is formed in one piece with the terminal of the transmission member, in which case additional machining is required, or is defined by an element independent of and fitted rigidly to the terminal, e.g. by means of a threaded connection.

In either case, the terminal is relatively complex and expensive.

It is an object of the present invention to provide a vehicle gearbox control device designed to overcome the aforementioned drawbacks typically associated with known devices.

According to the present invention, there is provided a vehicle gearbox control device comprising:
supporting means fitted to the vehicle body;
at least one lever secured to said supporting means and rotatable in relation to said supporting means about at least one axis;
an elongated transmission member for transmitting operation of said lever to said gearbox; and
ball joint connecting means interposed between said lever and said elongated transmission member;
characterized in that said ball joint connecting means comprise a spherical head integral with said elongated transmission member; and a corresponding spherical seat formed in said lever.

Two preferred, non-limiting embodiments of the present invention will be described by way of example with reference to the accompanying drawings, in which:
Figure 1 shows a partially sectioned, partial side view of a gearshift control device in accordance with the teachings of the present invention;
Figure 2 shows a section along line II-II in Figure 1;
Figure 3 shows a section along line III-III in Figure 1;
Figure 4 shows a section along line IV-IV in Figure 1;
Figure 5 shows a partial side view of an alternative embodiment of a gearshift control device in accordance with the present invention.

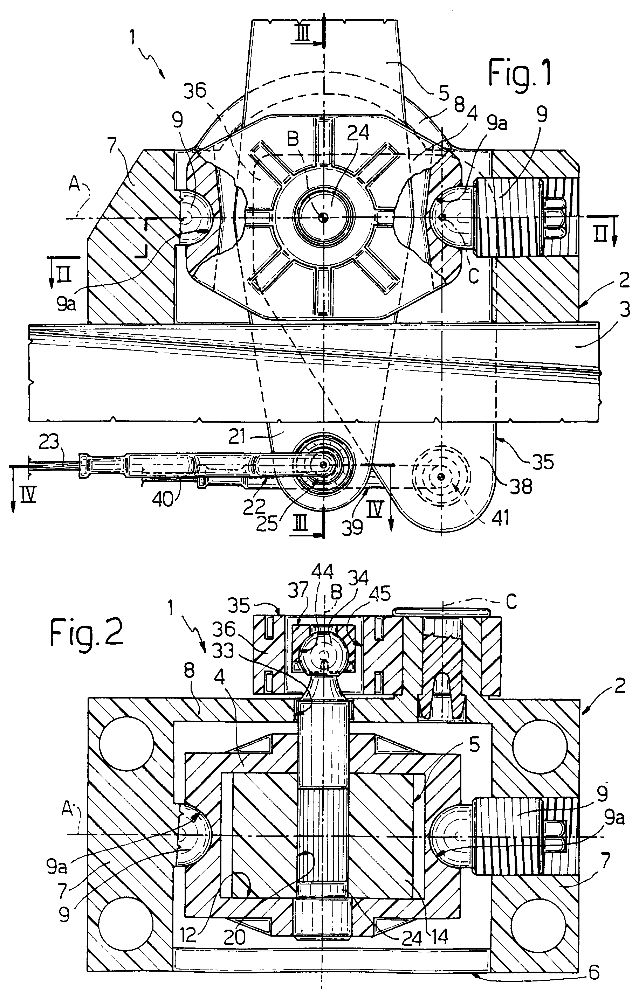

Number 1 in Figures 1 to 3 indicates a control device for a vehicle gearbox (not shown).

Device 1 substantially comprises a fixed supporting element 2 fitted rigidly to a vehicle body element 3; an intermediate element 4 rotatable in relation to supporting element 2 about a first axis A; and a control lever 5 fitted to intermediate element 4 and rotatable in relation to it about a second axis B perpendicular to axis A.

Lever 5 is thus rotatable, in relation to fixed supporting element 2, about axis A (fixed) and axis B (movable with intermediate element 4); axis A is substantially longitudinal in relation to the vehicle, and rotation about it provides for selecting the gears; axis B is crosswise to the vehicle, and rotation about it by lever 5 provides for engaging or disengaging the gears; and operation of lever 5 is transmitted to the gearbox (not shown) by linkage means described later on.

Supporting element 2 presents a substantially frame-like anchoring base 6 defining a central opening 11, and from which respective walls 7 extend upwards from the front and rear sides, and a lateral wall 8 extends upwards from one longitudinal side.

Intermediate element 4 is in the form of an elongated block extending in direction A, and is housed between and hinged to walls 7 by respective end pins 9 of axis A and fitted to walls 7. Pins 9 are spherical-headed and engage respective seats 9a formed in the opposite faces of element 4 facing respective walls 7.

Supporting element 2 and intermediate element 4 are conveniently molded from plastic material.

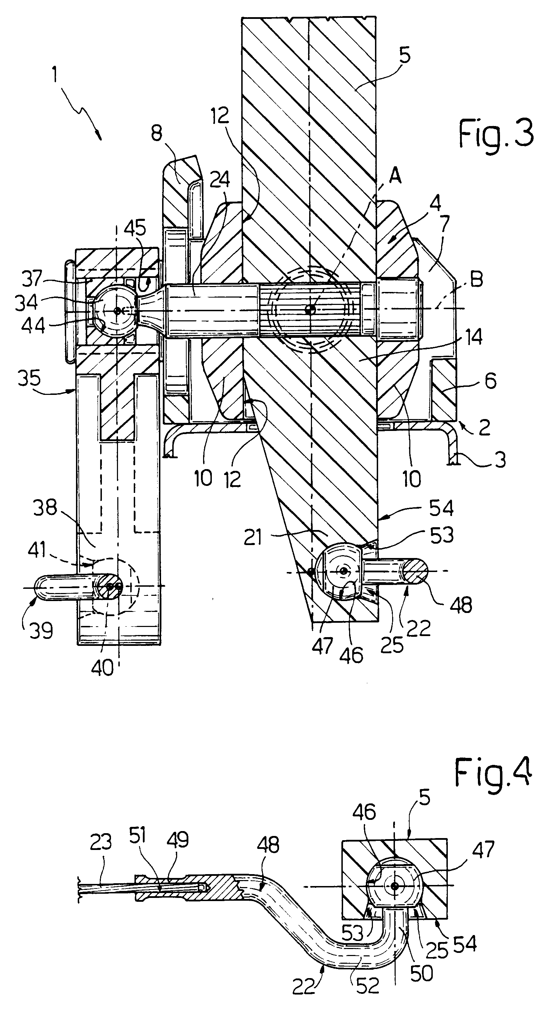

Intermediate element 4 (Figures 2 and 3) presents a longitudinal through opening 12 perpendicular to axes A and B, defined laterally by two parallel lateral walls 10 of intermediate element 4, and presenting a cross section (in a plane parallel to axes A and B) in the form of an elongated rectangle extending in the direction of axis A.

Lever 5 (Figures 1 and 2) is molded in one piece from plastic material, and presents an intermediate portion 14 housed in sliding manner with a small amount of lateral clearance inside opening 12, and presenting a transverse through hole 20, of axis B, defining a seat for a pin 24 permitting lever 5 to pivot in relation to intermediate element 4 (Figure 3).

Lever 5 also comprises a bottom end portion 21 connected to a terminal 22 of an engagement control cable 23 by means of a ball joint 25, as described in detail later on.

Pin 24 extends axially outwards of intermediate element 4 and beyond lateral wall 8 of supporting element 2 - which, for the purpose, presents a vertically elongated opening 33 - to form a spherical end head 34 which acts as an articulating element for controlling a linkage lever 35.

Lever 35 is made of plastic material, is substantially square, and is hinged to lateral wall 8 of supporting element 2 to pivot about an axis C (Figure 2) perpendicular to axis A, crosswise to the vehicle, and shifted rearwards in relation to axis B.

Lever 35 presents an arm 36 extending frontwards in a substantially longitudinal direction in relation to the vehicle, and connected to head 34 of pin 24 by an articulating element 37; and an arm 38 extending substantially downwards and connected to the terminal 39 of a gear selection control cable 40 by means of a ball joint 41, as described later on.

Articulating element 37 comprises a parallelepiped block of plastic material with a low friction coefficient, and presenting a spherical seat 44 cooperating with head 34 of pin 24. Block 37 is housed in sliding manner inside an opening 45 in arm 36, and is permitted to move axially and radially in relation to axis C, but with no tangential slack in relation to it.

According to the present invention, ball joint 25 (Figures 3 and 4) comprises a spherical seat 46 formed in the bottom end of control lever 5; and a spherical head 47 forming part of terminal 22 of cable 23. Terminal 22 comprises a shank 48 with one end portion 49 fitted to cable 23, and an opposite end portion 50 from which head 47 originates.

Portion 49 presents a straight axis, presents an axial hole 51 for receiving the end of cable 23, and is deformed permanently onto cable 23 to secure it to terminal 22.

Portion 50 presents an axis perpendicular to portion 49, and is connected integral with portion 49 by an intermediate portion 52, which is so shaped that the geometric center of spherical head 47 is located along the axis of portion 49 and is therefore aligned with cable 23.

Spherical seat 46 (Figures 3 and 4) communicates externally via an opening 53 formed in a lateral face 54 of lever 5, and slightly smaller in diameter than the maximum diameter of seat 46 (and head 47) so that head 47 may be pressed into and retained elastically inside seat 46.

Terminal 39 of cable 40 and ball joint 41 are formed in exactly the same way as terminal 22 and ball joint 25, and the parts similar or corresponding to those already described are indicated using the same reference numbers with no further description.

Device 1 operates as follows.

To select a given gear, control lever 5 is shifted laterally (Figure 3) to rotate it, pin 24 integral with it, and intermediate element 4 about axis A; the rotation of pin 24 about axis A crosswise to it produces an upward or downward movement, along an arc of a circle, of spherical head 34 which, via articulating element 37, transmits the movement to linkage lever 35; and lever 35 rotates about axis C to activate relative cable 40 via ball joint 41 and terminal 39, and to substantially axially pull or push cable 40 to shift the relative selection members inside the gearbox.

Once the required selection position is reached, the relative gear is engaged by rotating lever 5 axis B, which rotation is transmitted to cable 23 via ball joint 25 and terminal 22 to substantially axially push or pull cable 23.

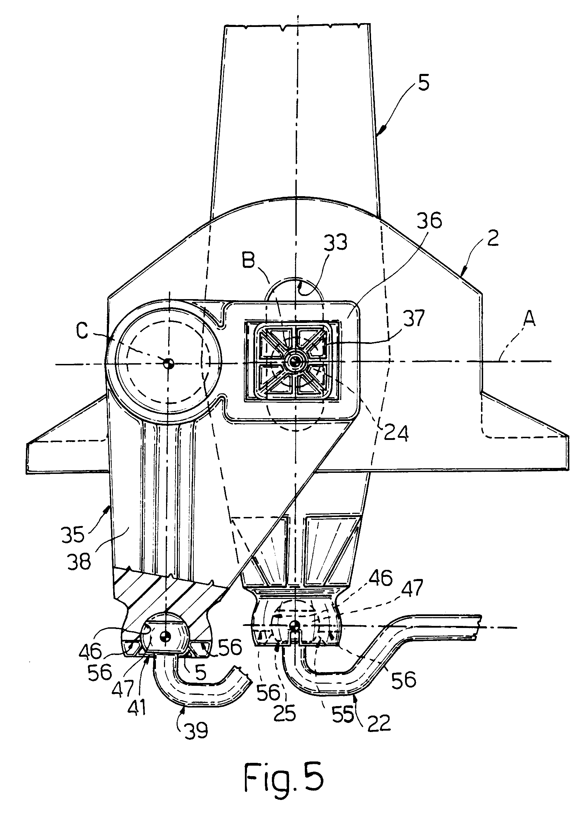

Figure 5 shows an alternative embodiment of device 1, wherein each ball joint 25, 41 comprises a respective spherical seat 46 formed in respective lever 5, 35 and communicating externally via a respective opening 55 formed on the free end of the lever and with its axis perpendicular to the rotation axis B, C of the respective lever. To enable spherical heads 47 to be pressed in easily, levers 5 and 35 conveniently present a number of radial slots 56 surrounding seats 46.

The advantages of the gearshift control device according to the present invention will be clear from the foregoing description.

Forming spherical seats 46 of ball joints 25, 41 inside respective levers 5, 35 molded from plastic material provides for simplifying the structure of terminals 22, 39. In particular, terminals 22, 39 may be molded in one piece, with no need for additional machining to form seats 46 in terminals 22, 39, or for fitting terminals 22, 39 with an independent articulating element with a spherical seat.

Moreover, the shape of terminals 22, 39 provides for substantially axially activating the cable, despite head 47 being inserted inside seat 46 in a crosswise direction to the cable.

As such, head 47 may be simply pressed into seat 46, by virtue of no pressure being applied in the withdrawal direction.

Clearly, changes may be made to device 1 as described and illustrated herein without, however, departing from the scope of the present invention.

In particular, the Bowden cables may be replaced by rigid rods; terminals 22, 39 may be fitted to the ends of the rods, or comprise end portions of them; lever 5 may be connected to supporting element 2 in any other manner, e.g. by means of a ball joint; and linkage lever 35 may be replaced by any other mechanism suitable for the purpose.

## Claims

1. A vehicle gearbox control device (1) comprising:
supporting means (2) fitted to the vehicle body (3);
at least one lever (5, 35) secured to said supporting means (2) and rotatable in relation to said supporting means about at least one axis (A, B; C);
an elongated transmission member (23, 40) for transmitting operation of said lever (5, 35) to said gearbox; and
ball joint connecting means (25, 41) interposed between said lever (5, 35) and said elongated transmission member (23, 40);
characterized in that said ball joint connecting means (25, 41) comprise a spherical head (47) integral with said elongated transmission member (23, 40); and a corresponding spherical seat (46) formed in said lever (5, 35).

2. A device as claimed in Claim 1, characterized in that said ball joint connecting means (25, 41) comprise a terminal (22, 39) fitted to one end of said elongated transmission member (23, 40) and integrally presenting said spherical head (47).

3. A device as claimed in Claim 1 or 2, characterized in that said terminal (22, 39) presents a shaped shank (48) with a first end (49) fitted to said elongated transmission member (23, 40), and a second end (50) presenting said spherical head (47); said ends (49, 50) of said shank (48) presenting respective axes perpendicular to each other; and the geometric center of said spherical head (47) being located along the axis of said first end (49) of said shank (48).

4. A device as claimed in any one of the foregoing Claims, characterized in that said spherical seat (46) presents an opening (53; 55) for the insertion of said spherical head (47), and which is smaller in diameter than the maximum diameter of said spherical head (47) and said spherical seat (46).

5. A device as claimed in any one of the foregoing Claims, characterized in that said opening (53) is formed in a lateral face of said lever.

6. A device as claimed in any one of the foregoing Claims from 1 to 4, characterized in that said opening is formed on one end of said lever (5, 35), and presents an axis perpendicular to the rotation axis (B, C) of the lever.

7. A device as claimed in any one of the foregoing Claims, characterized in that said lever (5, 35) is formed in one piece from plastic material.

8. A device as claimed in any one of the foregoing Claims, characterized in that it comprises a control lever (5) connected to said supporting means (2) so as to rotate about two axes (A, B) perpendicular to each other; and a linkage lever (35) hinged to said supporting means (2) and connected operatively to said control lever (5); said control lever (5) and said linkage lever (35) being connected to respective said elongated transmission members (23, 40) by respective said ball joint connecting means (25, 41).

9. A device as claimed in Claim 8, characterized in that said supporting means comprise a support (2) fitted to said vehicle body (3); and an intermediate element (4) hinged to said support (2) about a first (A) of said axes; said control lever (5) being hinged to said intermediate element (4) about a second (B) of said axes perpendicular to said first axis (A).

10. A device as claimed in Claim 9, characterized in that said support (2) and said intermediate element (4) are made of plastic material.
